# EUROPEAN PATENT SPECIFICATION

(11) **EP 4 253 474 B1**
(45) Date of publication and mention of the grant of the patent: **24.12.2025**
(21) Application number: 22851567.2
(22) Date of filing: 08.03.2022
(51) Int. Cl.: C08L 23/28, C08J 9/12, B29C 44/34

(54) **METHOD FOR PREPARING MATERIAL CONTAINING CHLORINATED POLYETHYLENE BY MEANS OF SUPERCRITICAL FOAMING**
VERFAHREN ZUR HERSTELLUNG VON CHLORIERTES POLYETHYLEN ENTHALTENDEM MATERIAL MITTELS SUPERKRITISCHER SCHÄUMUNG
PROCÉDÉ DE PRÉPARATION D'UN MATÉRIAU CONTENANT DU POLYÉTHYLÈNE CHLORÉ AU MOYEN D'UN MOUSSAGE SUPERCRITIQUE

(30) Priority: 03.08.2021 CN 202110884402
(43) Date of publication of application: 04.10.2023
(73) Proprietor: DMN Material Technology (Jiangsu) Limited, Nanjingshi, Jiangsu 211200 (CN)
(72) Inventor: BAI, Peng, Nanjingshi, Jiangsu 211200 (CN); ZHANG, Zhenxiu, Nanjingshi, Jiangsu 211200 (CN)
(74) Representative: Cabinet Chaillot
(86) International application number: PCT/CN2022/079781
(87) International publication number: WO 2023/010840

(56) References cited:
- EP-A1- 2 141 518
- CN-A- 105 924 814
- CN-A- 105 924 814
- CN-A- 107 200 941
- CN-A- 107 200 941
- CN-A- 107 880 370
- JP-A- 2001 213 991

## Description

### TECHNICAL FIELD

The invention relates to the field of foaming technology, in particular to C08G101/00, more in particular to a method for preparing foam materials by supercritical foaming.

### BACKGROUND

Chlorinated polyethylene is widely used because of its excellent weather resistance and solvent resistance. In CN201610058673, the foam material obtained by mixing chlorinated polyethylene, filling agent, foaming agent, crosslinking agent, lubricant and stabilizing agent, moulding and vulcanizing has weather resistance, chemical resistance and mechanical properties, but does not solve the problem of foam density; meanwhile, the chemical foaming agent is used to be mixed with the raw materials, so that foaming is not controlled, and it is difficult to ensure the foam uniformity. Therefore, it is necessary to provide a foaming method to solve the problem of uncontrolled foam, ensure the foam uniformity and smoothness, and improve the foaming density to expand the application range of chlorinated polyethylene materials. EP2141518A1 discloses a light-reflecting member and its production process, which comprising forming a polyolefin resin foam as a light-reflecting layer by foam molding a resin composition containing a polyolefin resin using a high-pressure gas such as carbon dioxide in a form of fluid in a supercritical state. CN107200941A discloses a chlorinated polyethylene elastomer microporous foaming material and the preparation method thereof, which comprising the preparation of the compounded rubber, pre-sulfidation, supercritical foaming and secondary sulfidation, and finalizing the shape. CN105924814A discloses a preparation method for chlorinated polyethylene/polyvinyl chloride composite foaming material, wherein the preparation the polyvinyl chloride is expanded by absorbing dioctyl phthalate to make it soft and elastic, then mixing it with cross-linking agent.

### SUMMARY

In view of some problems existing in the prior art, the invention provides a method for preparing foam materials by supercritical foaming in the first aspect, including the following steps:
(1) Add the chlorinated polyethylene material into the reactor, add water and foaming nucleating agent, and then close the reactor cover;
(2) Heat to 50-80 degrees C ;
(3) Inject supercritical carbon dioxide into the reactor, so that the chlorinated polyethylene material can achieve saturation adsorption of supercritical carbon dioxide;
(4) Remove and treat the chlorinated polyethylene material at 100-150 degrees C for 1-5 minutes.

The content of water in the invention is not specially limited, as long as the chlorinated polyethylene material can be immersed. The specific content can be conventionally chosen by the technicians in the field.

In one preferred embodiment, the water accounts for 60-80% of the volume of the reactor, more preferably 72wt%

In one preferred embodiment, the foaming nucleating agent accounts for 0.05-0.1wt% of water, preferably 0.08wt%.

Unexpectedly, the applicant finds that the foaming nucleating agent takes effect rapidly when the foaming nucleating agent accounts for 0.05-0.1wt% of water.

The foaming nucleating agents can be listed as follows: calcium carbonate, clay, fiber crystal, butane, pentane and so on.

According to the invention the foaming nucleating includes cyclopentane and n-pentane.

According to the invention, the weight ratio of cyclopentane and n-pentane is (4-6):1, more preferably 5:1.

Unexpectedly, the applicant finds that when the chlorinated polyethylene material includes the specific graphene in the invention, addition of a specific proportion of cyclopentane and n-pentane in the reactor can effectively avoid the heterogeneous nucleation caused by the foaming process of the chlorinated polyethylene material, reduce the foam size and increase the foam density.

In one preferred embodiment, in Step (2), the material is heated to 70 degrees C.

Unexpectedly, the applicant finds that when the material is heated to 50-80 degrees C, especially 70 degrees C, the final foam sizes are close and the differentiation is small.

According to the invention, in Step (3), supercritical carbon dioxide is injected to make the pressure in the reactor 20-30 MPa.

Unexpectedly, the applicant finds that when the pressure of the reactor is 20-30 MPa due to the injection of supercritical carbon dioxide, the time for the chlorinated polyethylene material in the invention to achieve saturation adsorption of supercritical carbon dioxide is relatively short, so that the production efficiency is improved.

According to the invention, supercritical carbon dioxide is injected in a segmented manner.

Segmented manner in the invention refers to the intermittent injection of supercritical carbon dioxide.

According to the invention, in Step (3), supercritical carbon dioxide is firstly injected at the rate of 2-5 MPa/s to make the pressure in the reactor reach 8-10 MPa and keep it for 15-20 minutes; then the supercritical carbon dioxide is injected again at the rate of 0.5-1 MPa/s to make the pressure in the reactor reach 12-15 MPa and keep it for 10-15 minutes; finally, the supercritical carbon dioxide is injected at the rate of 2-5 MPa/s to make the pressure in the reactor reach 20-30 MPa and keep it for a period of time until the chlorinated polyethylene material achieves saturation adsorption of supercritical carbon dioxide.

In a more preferred embodiment, in Step (3), supercritical carbon dioxide is firstly injected at the rate of 3 MPa/s to make the pressure in the reactor reach 8 MPa and keep it for 18 minutes; then the supercritical carbon dioxide is injected again at the rate of 0.6 MPa/s to make the pressure in the reactor reach 13 MPa and keep it for 12 minutes; finally, the supercritical carbon dioxide is injected at the rate of 2 MPa/s to make the pressure in the reactor reach 26 MPa and keep it for a period of time until the chlorinated polyethylene material achieves saturation adsorption of supercritical carbon dioxide.

In the experiments, the applicant finds that when the supercritical carbon dioxide is injected to make the pressure in the reactor 2-30 MPa, the foam uniformity and density of the final foam material obtained by the method cannot meet the requirements while improving the saturation adsorption efficiency. In the study, the applicant unexpectedly finds that the foam uniformity and density of the foam material finally obtained can meet the requirements when the supercritical carbon dioxide is firstly injected in a segmented manner at the rate of 2-5 MPa/s to make the pressure in the reactor reach 8-10 MPa and keep it for 15-20 minutes; then the supercritical carbon dioxide is injected again at the rate of 0.5-1 MPa/s to make the pressure in the reactor reach 12-15 MPa and keep it for 10-15 minutes; finally, the supercritical carbon dioxide is injected at the rate of 2-5 MPa/s to make the pressure in the reactor reach 20-30 MPa. The applicant thinks that the possible reason is that the supercritical carbon dioxide can be fully diffused into the chlorinated polyethylene material under such specific conditions to avoid affecting the diffusion of supercritical carbon dioxide into the chlorinated polyethylene material due to the diffusion resistance caused by viscosity when the supercritical carbon dioxide is injected. Meanwhile, the phenomenon of forming bubble barriers on the surface of the chlorinated polyethylene material may be avoided when the supercritical fluid is injected.

In one preferred embodiment, in Step (4), the chlorinated polyethylene material is removed and treated at 140 degrees C for 3 minutes.

Unexpectedly, the applicant finds that when treated at 100-150 degrees C for 1-5 minutes, the foam material obtained at this time avoids foams in the foams or on the boundary.

The specific type of chlorinated polyethylene material in the invention is not specially limited, and can be conventionally chosen by the technicians in the field.

The chlorinated polyethylene material in the invention can be self-made or purchased.

According to the invention, the chlorinated polyethylene material contains graphene.

In one preferred embodiment, the preparation method of the chlorinated polyethylene material includes: mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 100-150 degrees C to get a molding plate; irradiate and crosslink the molding plate with the crosslinking irradiation dose of 10-50KGy to obtain the chlorinated polyethylene material.

According to the invention, the preparation method of the chlorinated polyethylene material includes: mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 120degrees C to get a molding plate; irradiate and crosslink the molding plate with the crosslinking irradiation dose of 35KGy to obtain the chlorinated polyethylene material.

Chlorinated polyethylene in the invention is not specially limited, and can be conventionally chosen by the technicians in the field.

In one preferred embodiment, the chlorinated polyethylene is purchased from Sichuan Jinsen Plastic Co., Ltd., and the brand is JS.

The natural rubber is purchased from Taizhou Zhonghong Waste Rubber Comprehensive Utilization Co., Ltd., and the commodity name is natural reclaimed fine rubber.

The calcium-zinc stabilizer is purchased from Jinan Hui Jinchuan Trading Co., Ltd.

The graphene is purchased from Shandong Xiangzhao New Material Co., Ltd., the brand is Xiangzhao, and the model is 001.

The undisclosed part of the preparation method for chlorinated polyethylene material in the invention can be conventionally selected by technicians in the field.

The invention provides a foam material prepared by a method for preparing foam materials by supercritical foaming in the second aspect.

Compared with the prior art, the invention has the following beneficial effects:
(1) The preparation method is simple, environmentally friendly, efficient and low-cost, uniform micropores improve the elasticity of the foam material and reduce the density of the foam material, which is 0.2-0.3g/cm³, and the foam wall is thin.
(2) The foaming nucleating agent takes effect rapidly when the foaming nucleating agent with specific content is used, particularly 0.05-0.1wt%.
(3) When the foaming nucleating agent consists of a specific proportion of cyclopentane and n-pentane, and the chlorinated polyethylene material includes the specific graphene in the invention, the heterogeneous nucleation caused by the foaming process of the chlorinated polyethylene material can be effectively avoided, thereby reducing the foam size and increasing the foam density.
(4) When the material is heated to 50-80 degrees C in Step (2), especially 70 degrees C, the final foam sizes are close and the differentiation is small.
(5) When the supercritical carbon dioxide is injected to make the pressure of the reactor 20-30 MPa, the time for the chlorinated polyethylene material in the invention to achieve saturated adsorption of supercritical carbon dioxide is short, thereby improving the production efficiency;
(6) The foam uniformity and density of the foam material can meet the requirements by injecting the supercritical carbon dioxide in a segmented manner in the invention;
(7) When treated at 100-150 degrees C for 1-5 minutes, the foam material obtained at this time avoids foams in the foams or on the boundary.

### BRIEF DESCRIPTION OF THE DRAWINGS

Fig. 1 is the SEM image of foam material obtained in the example 1 of the invention.
Fig. 2 is the SEM image of foam material obtained in the example 5 of the invention.

### DETAILED DESCRIPTION OF THE EMBODIMENTS

The invention is described below by means of embodiments, but is not limited to the examples given below.

### Example 1

The example 1 of the invention provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 100 degrees C to get a molding plate; irradiate and crosslink the molding plate with the crosslinking irradiation dose of 10KGy to obtain the chlorinated polyethylene material;
(2) Add the chlorinated polyethylene material to the reactor, add water accounting for 60% of the volume of the reactor, and add the foaming nucleating agent to close the reactor cover, in which the foaming nucleating agent accounts for 0.05wt% of water, with the weight ratio 4:1 of cyclopentane and n-pentane;
(3) Heat to 50 degrees C;
(4) Inject the supercritical carbon dioxide at the rate of 2 MPa/s to make the pressure in the reactor reach 8 MPa and keep it for 15 minutes; then inject the supercritical carbon dioxide again at the rate of 0.5 MPa/s to make the pressure in the reactor reach 12 MPa and keep it for 10 minutes; finally, inject the supercritical carbon dioxide at the rate of 2 MPa/s to make the pressure in the reactor reach 20 MPa and keep it for a period of time until the chlorinated polyethylene material achieves saturation adsorption of supercritical carbon dioxide.
(5) Remove and treat the chlorinated polyethylene material at 100 degrees C for 5 minutes.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

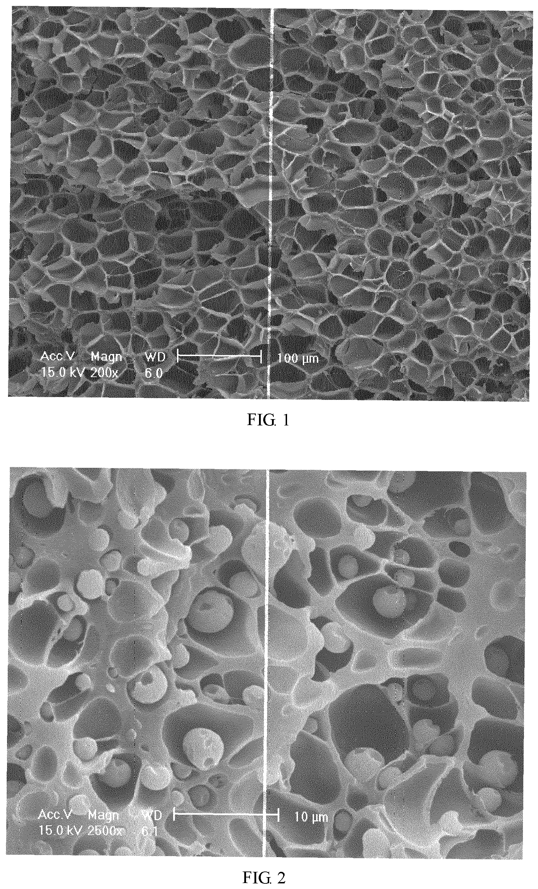

The SEM image of the foam material obtained in the embodiment is shown in Fig. 1, from which it can be seen that the foam material has orderly foams and large foam density.

### Example 2

The example w of the invention provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 150 degrees C to get a molding plate; irradiate and crosslink the molding plate with the crosslinking irradiation dose of 50KGy to obtain the chlorinated polyethylene material;
(2) Add the chlorinated polyethylene material to the reactor, add water accounting for 80% of the volume of the reactor, and add the foaming nucleating agent to close the reactor cover, in which the foaming nucleating agent accounts for 0.1wt% of water, with the weight ratio 6:1 of cyclopentane and n-pentane;
(3) Heat to 80 degrees C;
(4) Inject the supercritical carbon dioxide at the rate of 5 MPa/s to make the pressure in the reactor reach 10 MPa and keep it for 20 minutes; then inject the supercritical carbon dioxide again at the rate of 1 MPa/s to make the pressure in the reactor reach 15 MPa and keep it for 15 minutes; finally, inject the supercritical carbon dioxide at the rate of 5 MPa/s to make the pressure in the reactor reach 30 MPa and keep it for a period of time until the chlorinated polyethylene material achieves saturation adsorption of supercritical carbon dioxide.
(5) Remove and treat the chlorinated polyethylene material at 150 degrees C for 1 minute.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

### Example 3

The example 3 of the invention provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 120 degrees C to get a molding plate; irradiate and crosslink the molding plate with the crosslinking irradiation dose of 35KGy to obtain the chlorinated polyethylene material;
(2) Add the chlorinated polyethylene material to the reactor, add water accounting for 72% of the volume of the reactor, and add the foaming nucleating agent to close the reactor cover, in which the foaming nucleating agent accounts for 0.08wt% of water, with the weight ratio 5:1 of cyclopentane and n-pentane;
(3) Heat to 70 degrees C;
(4) Inject the supercritical carbon dioxide at the rate of 3 MPa/s to make the pressure in the reactor reach 8 MPa and keep it for 18 minutes; then inject the supercritical carbon dioxide again at the rate of 0.6 MPa/s to make the pressure in the reactor reach 13 MPa and keep it for 12 minutes; finally, inject the supercritical carbon dioxide at the rate of 2 MPa/s to make the pressure in the reactor reach 26 MPa and keep it for a period of time until the chlorinated polyethylene material achieves saturation adsorption of supercritical carbon dioxide.
(5) Remove and treat the chlorinated polyethylene material at 140 degrees C for 3 minutes.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

### Example 4

The example 4, not according to the invention, provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 120 degrees C to get a molding plate; irradiate and crosslink the molding plate with the crosslinking irradiation dose of 35KGy to obtain the chlorinated polyethylene material;
(2) Add the chlorinated polyethylene material to the reactor, add water accounting for 72% of the volume of the reactor, and add the foaming nucleating agent to close the reactor cover, in which the foaming nucleating agent accounts for 0.08wt% of water, with the weight ratio 5:1 of cyclopentane and n-pentane;
(3) Heat to 70 degrees C;
(4) Inject the supercritical carbon dioxide at the rate of 3 MPa/s to make the pressure in the reactor reach 26 MPa and keep it for a period of time until the chlorinated polyethylene material achieves saturation adsorption of supercritical carbon dioxide.
(5) Remove and treat the chlorinated polyethylene material at 140 degrees C for 3 minutes.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

### Example 5

The example 5 of the invention provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 120 degrees C to get a molding plate; irradiate and crosslink the molding plate with the crosslinking irradiation dose of 35KGy to obtain the chlorinated polyethylene material;
(2) Add the chlorinated polyethylene material to the reactor, add water accounting for 72% of the volume of the reactor, and add the foaming nucleating agent to close the reactor cover, in which the foaming nucleating agent accounts for 0.08wt% of water, with the weight ratio 5:1 of cyclopentane and n-pentane;
(3) Heat to 70 degrees C;
(4) Firstly inject the supercritical carbon dioxide at the rate of 3 MPa/s to make the pressure in the reactor reach 8 MPa and keep it for 18 minutes; then inject the supercritical carbon dioxide again at the rate of 0.6 MPa/s to make the pressure in the reactor reach 13 MPa and keep it for 12 minutes; finally, inject the supercritical carbon dioxide at the rate of 2 MPa/s to make the pressure in the reactor reach 26 MPa and keep it for a period of time until the chlorinated polyethylene material achieves saturation adsorption of supercritical carbon dioxide.
(5) Remove and treat the chlorinated polyethylene material at 160 degrees C for 3 minutes.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

The SEM image of the foam material obtained in the embodiment is shown in Fig. 2, from which it can be seen that there are foams growing in the foams of the foam material.

### Example 6

The example 6, not according to the invention, provides a method for preparing foam materials by supercritical foaming, including the following steps:
(1) Mix 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, extrude and granulate through a single screw extruder, and then extrude at 120 degrees C to get a molding plate; irradiate and crosslink the molding plate with the crosslinking irradiation dose of 35KGy to obtain the chlorinated polyethylene material;
(2) Add the chlorinated polyethylene material to the reactor, add water accounting for 72% of the volume of the reactor, and add the foaming nucleating agent to close the reactor cover, in which the foaming nucleating agent accounts for 0.08wt% of water, with the weight ratio 2:1 of cyclopentane and n-pentane;
(3) Heat to 70 degrees C;
(4) Firstly inject the supercritical carbon dioxide at the rate of 3 MPa/s to make the pressure in the reactor reach 8 MPa and keep it for 18 minutes; then inject the supercritical carbon dioxide again at the rate of 0.6 MPa/s to make the pressure in the reactor reach 13 MPa and keep it for 12 minutes; finally, inject the supercritical carbon dioxide at the rate of 2 MPa/s to make the pressure in the reactor reach 26 MPa and keep it for a period of time until the chlorinated polyethylene material achieves saturation adsorption of supercritical carbon dioxide.
(5) Remove and treat the chlorinated polyethylene material at 140 degrees C for 3 minutes.

The chlorinated polyethylene is purchased from Sichuan Jinsen Plastic Co., Ltd., and the brand is JS; the natural rubber is purchased from Taizhou Zhonghong Waste Rubber Comprehensive Utilization Co., Ltd., and the commodity name is natural reclaimed fine rubber; the calcium-zinc stabilizer is purchased from Jinan Hui Jinchuan Trading Co., Ltd.; the graphene is purchased from Shandong Xiangzhao New Material Co., Ltd., the brand is Xiangzhao, and the model is 001.

### Performance assessment

Foam morphology: The morphologies of the foams for the foam materials obtained in the examples 1-6 were respectively observed with an electron microscope to record whether the foams are regular and whether there are foams overlapped. Foam overlap refers to the presence of foams in the foams.

Foam density: The foam density of the foam materials obtained in the examples 1-6 were calculated respectively. Foam density refers to the number of foams per unit volume, in /cm³. If the foam density is more than 9×10⁷/cm³, the material will be qualified; if the foam density is less than 9×10⁷/cm³, the material will be unqualified.

**Table 1**

| | Foam morphology | Foam density |
|---|---|---|
| Example 1 | The foams are regular without overlap | Qualified |
| Example 2 | The foams are regular | Qualified |
| | without overlap | |
| Example 3 | The foams are regular without overlap | Qualified |
| Example 4 | The foams are regular without overlap | Unqualified |
| Example 5 | The foams are irregular and overlapped | Qualified |
| Example 6 | The foams are irregular and overlapped | Unqualified |

## Claims

1. A method for preparing foam materials by supercritical foaming, **characterized in that**, the method includes the following steps:
(1) add a chlorinated polyethylene material into the reactor, the chlorinated polyethylene material contains graphene, add water and foaming nucleating agent, and then close the reactor cover, the foaming nucleating agent comprises cyclopentane and n-pentane, and the weight of cyclopentane and n-pentane is (4-6):1;
(2) heat to 50-80 °C;
(3) inject supercritical carbon dioxide into the reactor, so that the chlorinated polyethylene material can achieve saturation adsorption of supercritical carbon dioxide;
(4) remove and treat the chlorinated polyethylene material at 100-150 °C for 1-5 minutes;
in Step (3), the supercritical carbon dioxide is injected at the rate of 2-5 MPa/s to make the pressure in the reactor reach 8-10 MPa and keep for 15-20 minutes; then the supercritical carbon dioxide is injected again at the rate of 0.5-1 MPa/s to make the pressure in the reactor reach 12-15 MPa and keep for 10-15 minutes; then the supercritical carbon dioxide is injected at the rate of 2-5 MPa/s to make the pressure in the reactor reach 20-30 MPa and keep for such a period that the chlorinated polyethylene material achieves saturation adsorption of supercritical carbon dioxide.

2. The method according to claim 1, **characterized in that**, in Step (4), the chlorinated polyethylene material is removed and treated at 140 °C for 3 minutes.

3. The method according to claim 2, **characterized in that**, water accounts for 60-80% of the volume of the reactor.

4. The method according to claim 3, **characterized in that**, the foaming nucleating agent accounts for 0.05-0.1wt% of water.

5. A foam material prepared by the method according to any one of claims 1 to 4, **characterized in that**, the formula is as follows: 65 parts of chlorinated polyethylene, 10 parts of natural rubber, 3 parts of calcium-zinc stabilizer, 10 parts of graphene, 0.2 part of stearic acid and 10 parts of dioctyl phthalate by weight, water and foaming nucleating agent, the foaming nucleating agent includes cyclopentane and n-pentane with a ratio of (4-6):1 by weight.

## Patentansprüche

1. Verfahren zur Herstellung von Schaumstoffen durch überkritisches Schäumen, **dadurch gekennzeichnet, dass** das Verfahren die folgenden Schritte umfasst:
(1) Hinzufügen eines chlorierten Polyethylenmaterials in den Reaktor, wobei das chlorierte Polyethylenmaterial Graphen enthält, Hinzufügen von Wasser und Schaumbildungsmittel, und anschließendes Schließen des Reaktorabdeckels, wobei das Schaumbildungsmittel Cyclopentan und n-Pentan umfasst, und wobei das Gewicht von Cyclopentan und n-Pentan (4-6):1 beträgt;
(2) Erhitzen auf 50-80 °C;
(3) Einspritzen von überkritischem Kohlendioxid in den Reaktor, so dass das chlorierte Polyethylenmaterial eine Sättigungsadsorption von überkritischem Kohlendioxid erreichen kann;
(4) Entfernen und Behandeln des chlorierten Polyethylenmaterials bei 100-150 °C für 1-5 Minuten;
wobei in Schritt (3) das überkritische Kohlendioxid mit einer Geschwindigkeit von 2-5 MPa/s eingespritzt wird, um den Druck im Reaktor auf 8-10 MPa zu bringen und 15-20 Minuten lang aufrechtzuerhalten, wobei anschließend das überkritische Kohlendioxid mit einer Geschwindigkeit von 0,5-1 MPa/s erneut eingespritzt wird,um den Druck im Reaktor auf 8-10 MPa zu bringen und 15-20 Minuten lang aufrechtzuerhalten, wobei anschließend das überkritische Kohlendioxid mit einer Geschwindigkeit von 2-5 MPa/s eingespritzt wird, um den Druck im Reaktor auf 20-30 MPa zu erhöhen und so lange aufrechtzuerhalten, bis das chlorierte Polyethylenmaterial eine Sättigungsadsorption des überkritischen Kohlendioxids erreicht hat.

2. Verfahren nach Anspruch 1, **dadurch gekennzeichnet, dass** in Schritt (4) das chlorierte Polyethylenmaterial entfernt und 3 Minuten lang bei 140 °C behandelt wird.

3. Verfahren nach Anspruch 2, **dadurch gekennzeichnet, dass** Wasser 60 bis 80 % des Volumens des Reaktors ausmacht.

4. Verfahren nach Anspruch 3, **dadurch gekennzeichnet, dass** das Schaumbildungsmittel 0,05 bis 0,1 Gew.-% des Wassers ausmacht.

5. Schaumstoff, der nach einem der Verfahren gemäß den Ansprüchen 1 bis 4 hergestellt ist, **dadurch gekennzeichnet, dass** die Formel wie folgt lautet: 65 Teile chloriertes Polyethylen, 10 Teile Naturkautschuk, 3 Teile Calcium-Zinc-Stabilisator, 10 Teile Graphen, 0,2 Teil Stearinsäure und 10 Teile Dioctylphthalat nach Gewicht, Wasser und Schaumbildungsmittel, wobei das Schaumbildungsmittel Cyclopentan und n-Pentan mit einem Verhältnis von (4-6):1 nach Gewicht umfasst.

## Revendications

1. Procédé de préparation de matériaux expansés par moussage supercritique, **caractérisé en ce qu'**il comprend les étapes suivantes :
(1) ajouter un matériau en polyéthylène chloré dans le réacteur, le matériau en polyéthylène chloré contenant du graphène, ajouter de l'eau et un agent nucléant de moussage, puis fermer le couvercle du réacteur, l'agent nucléant de moussage comprenant du cyclopentane et du n-pentane, et le poids du cyclopentane et du n-pentane étant de (4-6):1;
(2) chauffer à 50-80 °C;
(3) injecter du dioxyde de carbone supercritique dans le réacteur, de sorte que le matériau en polyéthylène chloré puisse atteindre une adsorption à saturation du dioxyde de carbone supercritique;
(4) retirer et traiter le matériau polyéthylène chloré à 100-150 °C pendant 1 à 5 minutes; à l'étape (3), le dioxyde de carbone supercritique est injecté à un débit de 2 à 5 MPa/s afin que la pression dans le réacteur atteigne 8 à 10 MPa et soit maintenue pendant 15 à 20 minutes ; puis le dioxyde de carbone supercritique est à nouveau injecté à un débit de 0,5 à 1 MPa/s pour que la pression dans le réacteur atteigne 12 à 15 MPa et soit maintenue pendant 10 à 15 minutes ; puis le dioxyde de carbone supercritique est injecté à un débit de 2 à 5 MPa/s pour que la pression dans le réacteur atteigne 20 à 30 MPa et soit maintenue pendant une durée suffisante pour que le matériau en polyéthylène chloré atteigne une adsorption saturée de dioxyde de carbone supercritique.

2. Procédé selon la revendication 1, **caractérisé en ce que**, à l'étape (4), le matériau en polyéthylène chloré est retiré et traité à 140 °C pendant 3 minutes.

3. Procédé selon la revendication 2, **caractérisé en ce que** l'eau représente 60 à 80 % du volume du réacteur.

4. Procédé selon la revendication 3, **caractérisé en ce que** l'agent de nucléation moussant représente 0,05 à 0,1 % en poids de l'eau.

5. Matériau expansé préparé selon le procédé selon l'une quelconque des revendications 1 à 4, **caractérisé en ce que** la formule est la suivante : 65 parties de polyéthylène chloré, 10 parties de caoutchouc naturel, 3 parties de stabilisant calcium-zinc, 10 parties de graphène, 0,2 partie d'acide stéarique et 10 parties de phtalate de dioctyle en poids, de l'eau et un agent nucléant moussant, l'agent nucléant moussant comprenant du cyclopentane et du n-pentane dans un rapport de (4-6):1 en poids.
